# EUROPÄISCHE PATENTSCHRIFT

(11) **EP 2 011 723 B1**
(45) Veröffentlichungstag und Bekanntmachung des Hinweises auf die Patenterteilung: **13.10.2010**
(21) Anmeldenummer: 08004839.0
(22) Anmeldetag: 14.03.2008
(51) Int. Cl.: B62D 35/00

(54) **Luftleiteinrichtung eines Kraftfahrzeuges**
Aerodynamic spoiler for a motor vehicle
Déflecteur aérodynamique pour un véhicule automobile

(30) Priorität: 05.07.2007 DE 102007031408
(43) Veröffentlichungstag der Anmeldung: 07.01.2009
(73) Patentinhaber: Dr. Ing. h.c. F. Porsche AG, 70435 Stuttgart (DE)
(72) Erfinder: Paul, Joachim, 70563 Stuttgart (DE); Marzia, Sascha, 80804 München (DE)

(56) Entgegenhaltungen:
- EP-A- 0 398 784
- EP-A- 1 733 922
- DE-A1- 3 735 185
- DE-A1- 10 130 405
- DE-C1- 19 652 692

## Beschreibung

Die vorliegende Erfindung betrifft eine zwischen einer Nichtgebrauchsstellung und zumindest einer Gebrauchsstellung verstellbare Luftleiteinrichtung, welche an ihrem in Fahrtrichtung gesehen hinteren Endbereich über eine, eine Faltenstruktur aufweisende Abdeckeinrichtung mit einem Heckdeckel eines Kraftfahrzeuges verbunden ist, gemäß dem Oberbegriff des Anspruchs 1.

Insbesondere bei Sportwagen, wird oftmals zur Verbesserung einer Straßenlage bei hohen Geschwindigkeiten heckseitig eine Luftleiteinrichtung, umgangssprachlich auch Heckspoiler genannt, angeordnet. Diese Luftleiteinrichtung bewirkt einen geschwindigkeitsabhängigen Anpressdruck des Kraftfahrzeugs auf die Straße, wodurch dessen Bodenhaftung verbessert wird. Hierbei werden feste und ausfahrbare Luftleiteinrichtung unterschieden, wobei insbesondere letztere oftmals an ihrem in Fahrtrichtung gesehenen hinteren Endbereich eine Abdeckeinrichtung aufweisen, über welche die Luftleiteinrichtung mit einem Heckdeckel des Kraftfahrzeugs verbunden ist und welche eine sich unter der Luftleiteinrichtung befindliche Mechanik beziehungsweise ein Gebläse oder Luftfilterkanäle vor Verschmutzung schützen soll.

Aus der DE 196 52 692 C1 ist ein Kraftfahrzeug mit einer im Heckbereich ausfahrbaren Luftleiteinrichtung und wenigstens einer langgestreckten, zusätzlichen Bremsleuchte bekannt. Ein hinterer Randbereich der ausgestellten Luftleiteinrichtung ist dabei über eine zieharmonikaartige Abdeckeinrichtung mit einem Flansch eines Heckdeckels verbunden. Die zieharmonikaartige Ausbildung der Abdeckeinrichtung gewährleistet dabei ein sich stufenloses Anpassen derselben an unterschiedlichste Ausfahrzustände der Luftleiteinrichtung. Da sich die Abdeckeinrichtung üblicherweise über die gesamte Breite der Luftleiteinrichtung erstreckt, um einen zuverlässigen Schutz der darunter angeordneten Teile vor Verschmutzung zu gewährleisten, kann es bei der Verwendung eines weichen Kunststoffmaterials für die Abdeckeinrichtung dazu kommen, dass einzelne Falten der Abdeckeinrichtung durchhängen und dies zu einem negativen ästhetischen Empfinden führt.

Die DE 37 35 185 A1 zeigt eine zwischen einer Nichtgebrauchsstellung und zumindest einer Gebrauchsstellung verstellbare Luftleiteinrichtung im Heckbereich eines Kraftfahrzeuges, welche an ihrem in Fahrtrichtung gesehen hinteren Endbereich über eine, eine Faltenstruktur aufweisende Abdeckeinrichtung mit einem Aufbau, insbesondere mit einem Heckdeckel des Kraftfahrzeuges (1) verbunden ist, wobei die Abdeckeinrichtung als Zwei-Komponenten-Bauteil ausgebildet ist. Bei dieser Abdeckeinrichtung sind die Lamellen aus einem relativ harten Kunststoff hergestellt, wogegen die zwischen den einzelnen Lamellen vorgesehenen relativ dünn ausgebildeten Filmgelenkscharniere aus einem weichen Kunststoff bestehen.

Der vorliegenden Erfindung liegt die Aufgabe zugrunde, für eine gattungsgemäße Luftleiteinrichtung eine verbesserte Ausführungsform anzugeben, welche insbesondere die aus dem Stand der Technik bekannten Nachteile überwindet.

Die Erfindung löst diese Aufgabe durch den Gegenstand des Anspruchs 1. Die Unteransprüche beschreiben bevorzugte Ausführungsformen.

Die Erfindung beruht auf dem allgemeinen Gedanken, eine, eine Faltenstruktur aufweisende Abdeckeinrichtung, welche einerseits an einer verstellbaren Luftleiteinrichtung und andererseits an einem Aufbau eines Kraftfahrzeugs befestigt ist, als Zwei-Komponenten-Bauteil auszubilden und dadurch individuell Einfluss auf die Steifigkeit der Faltenstruktur der Abdeckeinrichtung nehmen zu können. Die Luftleiteinrichtung ist dabei zwischen einer Nichtgebrauchsstellung, auch Ruhestellung genannt, und zumindest einer Gebrauchsstellung verstellbar, wobei die Abdeckeinrichtung am in Fahrtrichtung gesehen hinteren Endbereich der Luftleiteinrichtung angeordnet ist und ein Verschmutzen von unter der ausgefahrenen Luftleiteinrichtung gelegenen Teilen verhindern soll. Durch die Ausbildung als Zwei-Komponenten-Bauteil ist es beispielsweise möglich, die Faltenstruktur der Abdeckeinrichtung partiell zu versteifen und dadurch ein, einen ästhetischen Eindruck negativ beeinflussendes Durchhängen der einzelnen Lamellen wirkungsvoll zu verhindern. Im Unterschied zu üblichen Versteifungselementen, wie beispielsweise Einlagen aus Metall, bietet die erfindungsgemäß ausgestaltete Abdeckeinrichtung den großen Vorteil, dass die Versteifung der einzelnen Lamellen mit äußerst geringem zusätzlichem Gewicht möglich ist und zugleich die gesamte Abdeckeinrichtung einfach herzustellen ist, ohne dass beispielsweise Versteifungselemente aufwendig in eine Spritzform für die Abdeckeinrichtung eingelegt werden müssten.

Zweckmäßig ist die Abdeckeinrichtung aus zwei Kunststoffkomponenten hergestellt, wobei sich eine erste Kunststoffkomponente durchgehend über die gesamte Faltenstruktur, das heißt über die Gelenke derselben und über die zwischen den Gelenken verlaufenden Lamellen erstreckt, während eine zweite und im Vergleich zur ersten härtere Kunststoffkomponente nur im Bereich der Lamellen zur Verstärkung derselben vorgesehen ist. Die erste, das heißt weiche Kunststoffkomponente ist somit durchgehend an der Abdeckeinrichtung vorgesehen, während die zweite, das heißt härtere Kunststoffkomponente, lediglich an den zu versteifenden Stellen, insbesondere an den Lamellen, vorgesehen ist. Hierdurch kann eine individuelle Versteifung erreicht werden, wobei beispielsweise denkbar ist, dass die erfindungsgemäße zweite Kunststoffkomponente lediglich an jeder zweiten Lamelle oder aber an jeder Lamelle vorgesehen ist, wodurch ebenfalls das Steifigkeitsverhalten der Einzellamellen individuell beeinflussbar ist. Die erste Kunststoffkomponente ist dabei so weich, dass sie im Bereich der Gelenke ein müheloses Abwinkeln der einzelnen Falten und damit ein müheloses Falten der Abdeckeinrichtung erlaubt. Durch die beiden Kunststoffkomponenten wird eine Abdeckeinrichtung geschaffen, die einerseits eine ausreichende Flexibilität, andererseits aber auch eine ausreichende Steifigkeit aufweist.

Zweckmäßig ist die erste Kunststoffkomponente ein thermoplastisches Elastomer und die zweite Kunststoffkomponente ein Thermoplast, insbesondere Polypropylen. Thermoplastische Elastomere sind Kunststoffe, die sich bei Raumtemperatur vergleichbar den klassischen Elastomeren verhalten, sich jedoch unter Wärmezufuhr plastisch verformen lassen. Aufgrund der sehr kurzen Zykluszeiten durch den kunststoffähnlichen Verarbeitungsprozess lassen sich hohe Taktzeiten erreichen, was indirekt zu einer Senkung der Produktionskosten führt. Polypropylen hingegen hat eine im Vergleich zu thermoplastischen Elastomeren höhere Steifigkeit, Härte und Festigkeit und eignet sich daher besonders gut zum Aussteifen der Lamellen der Abdeckeinrichtung. Gleichzeitig weist thermoplastisches Polypropylen eine sehr geringe Dichte und damit ein sehr geringes Gewicht auf, was insbesondere im Sportwagenbau von großem Vorteil ist.

Bei einer weiteren vorteilhaften Ausführungsform der erfindungsgemäßen Lösung weist eine obere Lamelle der Faltenstruktur der Abdeckeinrichtung zumindest ein Halteelement oder wenigstens eine Halteöffnung zur Befestigung an der Luftleiteinrichtung auf. Das zumindest eine Halteelement kann dabei ebenso wie die zweite Kunststoffkomponente an die erste Kunststoffkomponente angespritzt und dadurch einfach mit der Faltenstruktur verbunden werden. Hierbei wird vorzugsweise die zweite, das heißt härtere Kunststoffkomponente sowohl für die Aussteifung der Lamellen als auch für die Herstellung der Halteelemente verwendet, so dass für die gesamte Abdeckeinrichtung vorzugsweise ausschließlich zwei Kunststoffkomponenten verwendet werden. Selbstverständlich können ähnliche Halteelemente beziehungsweise Halteöffnungen an einer unteren Lamelle vorgesehen sein, über welche die Abdeckeinrichtung mit einem Aufbau beziehungsweise einem Heckdeckel des Kraftfahrzeugs verbunden wird. Durch das Anspritzen der Halteelemente kann deren Herstellung deutlich rationalisiert werden, so dass im Vergleich zu separat montierten Halteelementen ein nicht zu unterschätzender Zeit- und Kostenvorteil erzielbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Seitenansicht auf eine erfindungsgemäße Abdeckeinrichtung in einem Einbauzustand,
- Fig. 2: eine Ansicht auf die Abdeckeinrichtung,
- Fig. 3: eine Explosionsdarstellung eines heckseitigen Aufbaus eines Kraftfahrzeugs mit einer Luftleiteinrichtung und der erfindungsgemäßen Abdeckeinrichtung,
- Fig. 4: eine Draufsicht sowie unterschiedliche Schnittdarstellungen der Abdeckeinrichtung.

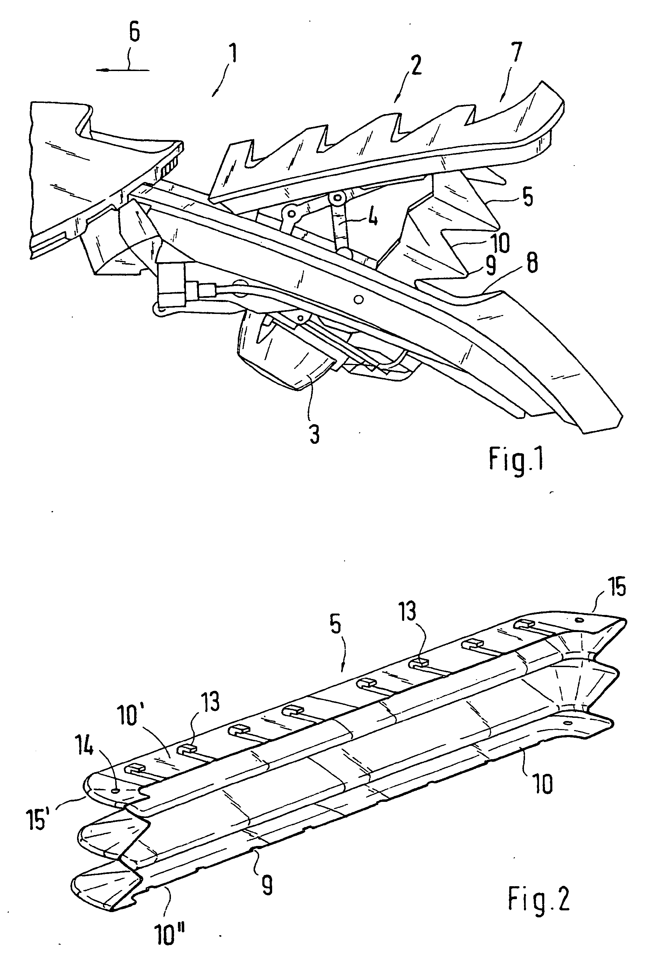

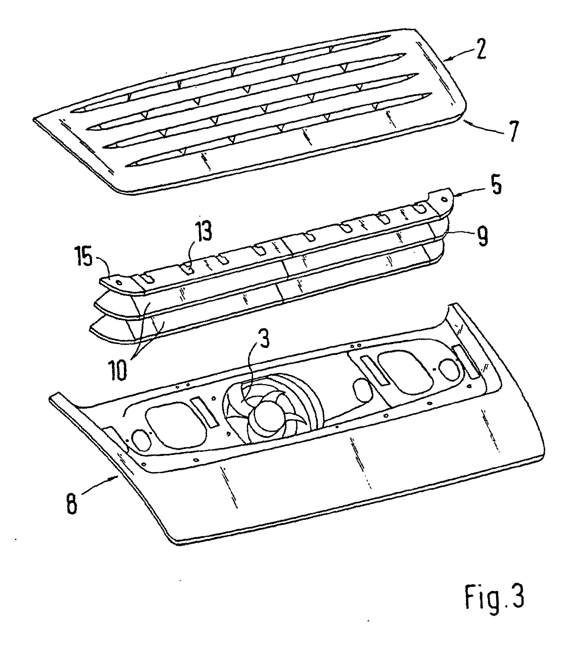

Entsprechend Fig. 1 weist ein im übrigen nicht dargestelltes Kraftfahrzeug 1 in seinem Heckbereich eine, zwischen einer Nichtgebrauchsstellung und zumindest einer Gebrauchsstellung verstellbare Luftleiteinrichtung 2 auf. Gemäß der Fig. 1 ist dabei die Luftleiteinrichtung 2 in einer ausgefahrenen Stellung gezeigt. Ausgefahren wird die Luftleiteinrichtung 2 immer dann, wenn ein erhöhter Abtrieb auf das Kraftfahrzeug 1, insbesondere bei höheren Geschwindigkeiten, und verbunden damit eine bessere Straßenhaftung erzeugt werden soll. Unterhalb der Luftleiteinrichtung 2 sind verschiedene Komponenten, wie beispielsweise ein Gebläse 3 oder eine Hebelmechanik 4 zum Verstellen der Luftleiteinrichtung 2 angeordnet (vgl. auch Fig. 3). Um die eben genannten Komponenten 3, 4 auch bei ausgefahrener Luftleiteinrichtung 2 vor einer Verschmutzung, beispielsweise ausgelöst durch heckseitig aufgewirbeltes Wasser zu schützen, ist eine, eine Faltenstruktur aufweisende Abdeckeinrichtung 5 vorgesehen, welche einenends an einem in Fahrtrichtung 6 gesehen hinteren Endbereich 7 der Luftleiteinrichtung 2 und anderenends an einem Aufbau 8 des Kraftfahrzeugs befestigt ist. Bei dem Aufbau 8 kann es sich beispielsweise um einen Heckdeckel handeln.

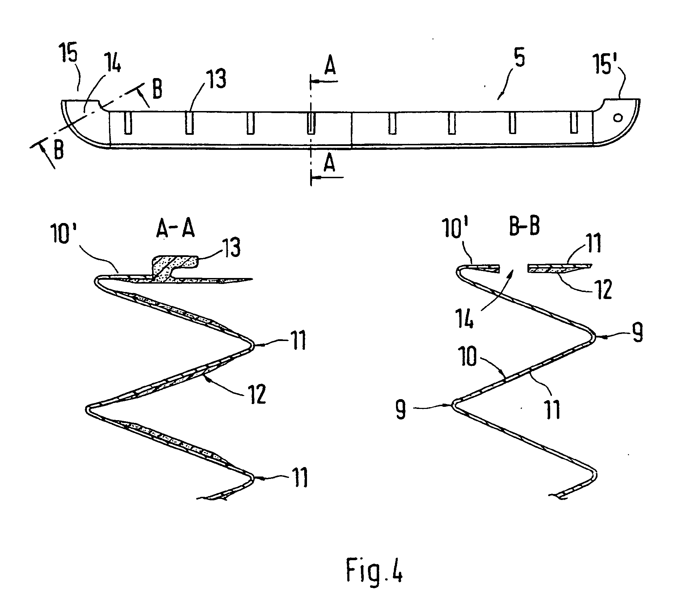

Um die Ausfahrbewegung der Luftleiteinrichtung 2 mitmachen zu können, ist die Abdeckeinrichtung 5 flexibel ausgebildet und weist einzelne, über Gelenke 9 miteinander verbundene Lamellen 10 auf. Da sich die Abdeckeinrichtung 5 üblicherweise über die gesamte Breite der Luftleiteinrichtung 2 erstreckt, sollte die Abdeckeinrichtung 5 nicht zu weich ausgebildet sein, da die Lamellen 10 ansonsten durchhängen und zu einem unästhetischen Erscheinungsbild führen. Andererseits darf die Abdeckeinrichtung 5 nicht zu steif ausgebildet sein, da ansonsten ein leichtes Falten der Abdeckeinrichtung 5 beim Ein-/Ausfahren der Luftleiteinrichtung 2 nicht mehr möglich ist. Aus diesem Grund ist die Abdeckeinrichtung 5 als Zwei-Komponenten-Bauteil ausgebildet und besteht vorzugsweise aus zwei Kunststoffkomponenten 11, 12, wobei sich eine erste Kunststoffkomponente 11 durchgehend über die Gelenke 9 der Faltenstruktur und über die zwischen den Gelenken 9 verlaufende Lamellen 10 erstreckt, während eine zweite und im Vergleich zur ersten härtere Kunststoffkomponente 12 nur im Bereich der Lamellen 10 zur Verstärkung derselben vorgesehen ist (vgl. Fig. 4). Als erste Kunststoffkomponente 11 kommt beispielsweise ein thermoplastisches Elastomer und als zweite Kunststoffkomponente 12 ein Thermoplast, insbesondere Polypropylen in Betracht. Generell kann dabei die Faltenstruktur der Abdeckeinrichtung 5 im Spritzgussverfahren hergestellt werden, wobei die zweite Kunststoffkomponente 12 an beziehungsweise auf die erste Kunststoffkomponente 11 an-/aufgespritzt wird.

Fig. 2 zeigt eine mögliche Ausgestaltung der Abdeckeinrichtung 5, wobei an einer oberen Lamelle 10' der Faltenstruktur zumindest ein Halteelement 13, hier insgesamt acht Halteelemente 13, zur Befestigung der Abdeckeinrichtung 5 an der Luftleiteinrichtung 2 vorgesehen sind. Denkbar ist auch, dass anstatt der Halteelemente 13 Halteöffnungen 14 vorgesehen sind, welche mit entsprechend an der Luftleiteinrichtung 2 angeordneten Halteelementen zusammenwirken. In gleicher Weise sind auch an einer unteren Lamelle 10" der Faltstruktur Halteelemente 13 beziehungsweise Halteöffnungen 14 zur Befestigung der Abdeckeinrichtung am Aufbau/Heckdeckel 8 vorgesehen.

Wie der Schnittdarstellung A-A in Fig. 4 zu entnehmen ist, ist das Halteelement 13 integraler Teil der zweiten Kunststoffkomponente 12 bzw. an diese angespritzt. Die erste Kunststoffkomponente 11 ist auf der obersten Lamelle 10' zudem nicht über die gesamte Lamellenbreite durchgehend angeordnet. In der Schnittdarstellung B-B gemäß Fig. 4 ist dies anders. An den Stirnseiten 15, 15' ist die erste Kunststoffkomponente 11 über die gesamte Breite der obersten Lamelle 10' durchgehend ausgebildet, ebenso wie die zweite Kunststoffkomponente 12.

Gemäß den Fig. 2 und 4 ist die Faltenstruktur der Abdeckeinrichtung 5 an ihren Stirnseiten 15 und 15' abgewinkelt ausgebildet, wobei im abgewinkelten Bereich die Lamellen 10 - mit Ausnahme zumindest der obersten Lamelle 10' - lediglich aus der ersten, das heißt weichen Kunststoffkomponente 11 ausgebildet sind. Dies ist gemäß der Fig. 4 in der Schnittdarstellung B-B gezeigt.

Durch die erfindungsgemäße Ausbildung der Abdeckeinrichtung 5 als Zwei-Komponenten-Bauteil kann neben einer Reduzierung des Gewichts auch eine Verkürzung von Montagezeiten sowie eine Reduzierung der Komplexität erreicht werden. Gleichzeitig weist die derartig ausgebildete Abdeckeinrichtung 5 im Vergleich zu einer lediglich aus der ersten Kunststoffkomponente 11 ausgebildeten Abdeckeinrichtung 5 eine höhere Steifigkeit und damit eine verbesserte Stabilität auf. Neben diesen Produktions- und Kostenvorteilen bietet die erfindungsgemäße Abdeckeinrichtung 5 auch eine durchgehend glatte Oberfläche ohne sichtbare Kanten und damit einen designerischen Vorteil.

Gemäß einer besonders bevorzugten Ausführungsform kann im Bereich wenigstens einer Lamelle 10 und/oder eines Gelenkes 9 eine nicht näher bezeichnete Leuchteinrichtung, welche beispielsweise als Bremslicht oder als beleuchtetes Emblem ausgebildet ist, vorgesehen sein. Hierbei können insbesondere sogenannte Leuchtfolien, Leuchtfasern oder Leuchtdioden zum Einsatz kommen, welche gegebenenfalls die erforderliche Aus/Einfahrbewegung der Luftleiteinrichtung 2 und verbunden damit das zieharmonikaartige Auseinanderziehen beziehungsweise Zusammendrücken der Abdeckeinrichtung 5 mitmachen.

Anstelle der Leuchtelemente kann an wenigstens einer Lamelle 10 auch ein Farbeinsatz vorgesehen sein (Zweifarbikgkeit/Schriftzug).

## Patentansprüche

1. Eine zwischen einer Nichtgebrauchsstellung und zumindest einer Gebrauchsstellung verstellbare Luftleiteinrichtung (2), insbesondere ein Heckspoiler, welche an ihrem in Fahrtrichtung (6) gesehen hinteren Endbereich (7) über eine, eine Faltenstruktur aufweisende Abdeckeinrichtung (5) mit einem Aufbau (8), insbesondere mit einem Heckdeckel (8) eines Kraftfahrzeuges (1) verbunden ist, wobei die Abdeckeinrichtung (5) als Zwei-Komponenten-Bauteil ausgebildet ist, und wobei die Abdeckeinrichtung (5) aus zwei Kunststoffkomponenten (11, 12) hergestellt ist, **dadurch gekennzeichnet, dass** sich eine erste Kunststoffkomponente (11) durchgehend über die Gelenke (9) der Faltenstruktur und über die zwischen den Gelenken (9) verlaufende Lamellen (10) erstreckt, während eine zweite und im Vergleich zur ersten härtere Kunststoffkomponente (12) nur im Bereich der Lamellen (10) zur Verstärkung derselben vorgesehen ist.

2. Luftleiteinrichtung nach Anspruch 1, **dadurch gekennzeichnet, dass** die erste Kunststoffkomponente (11) ein thermoplastisches Elastomer (TPE) und die zweite Kunststoffkomponente (12) ein Thermoplast (TP), insbesondere Polypropylen (PP), ist.

3. Luftleiteinrichtung nach einem der Ansprüche 1 und 2, **dadurch gekennzeichnet,**
- **dass** eine obere Lamelle (10') der Faltenstruktur zumindest ein Halteelement (13) und/oder wenigstens eine Halteöffnung (14) zur Befestigung an der Luftleiteinrichtung (2) aufweist, und/oder
- **dass** eine untere Lamelle (10") der Faltenstruktur zumindest ein Halteelement (13) und/oder wenigstens eine Halteöffnung (14) zur Befestigung am Aufbau/Heckdeckel (8) aufweist.

4. Luftleiteinrichtung nach einem der Ansprüche 1 bis 3, **dadurch gekennzeichnet, dass** die Faltenstruktur im Spritzgussverfahren hergestellt ist, wobei die zweite Kunststoffkomponente (12) auf die erste Kunststoffkomponente (11) aufgespritzt ist, oder umgekehrt.

5. Luftleiteinrichtung nach einem der Ansprüche 1 bis 4, **dadurch gekennzeichnet, dass** die Faltenstruktur an ihren Stirnseiten (15, 15') abgewinkelt ausgebildet ist, wobei in dem abgewinkelten Bereich (15, 15') die Lamellen (10) lediglich aus der ersten, weichen Kunststoffkomponente (11) ausgebildet sind.

6. Luftleiteinrichtung nach einem der Ansprüche 1 bis 5, **dadurch gekennzeichnet, dass** im Bereich wenigstens einer Lamelle (10) eine Leuchteinrichtung vorgesehen ist.

7. Luftleiteinrichtung nach Anspruch 6, **dadurch gekennzeichnet, dass** die Leuchteinrichtung als Bremslicht oder als beleuchtetes Emblem ausgebildet ist.

8. Luftleiteinrichtung nach einem der Ansprüche 1 bis 5, **dadurch gekennzeichnet, dass** im Bereich wenigstens einer Lamelle (10) ein Farbeinsatz vorgesehen ist.

9. Kraftfahrzeug (1) mit einer Luftleiteinrichtung (2) nach einem der Ansprüche 1 bis 8.

## Claims

1. Aerodynamic spoiler (2), in particular a rear spoiler, which can be adjusted between an inoperative position and at least one operative position and is connected at the rear end region (7) thereof, as seen in the direction of travel (6), to a structure (8), in particular to a rear lid (8) of a motor vehicle (1), via a covering device (5) having a folded structure, wherein the covering device (5) is designed as a two-component component, and wherein the covering device (5) is produced from two plastics components (11, 12), **characterized in that** a first plastics component (11) extends continuously over the joints (9) of the folded structure and over the slats (10) running between the joints (9) while a second plastics component (12) which is harder than the first plastics component is provided only in the region of the slats (10) to reinforce same.

2. Aerodynamic spoiler according to Claim 1, **characterized in that** the first plastics component (11) is a thermoplastic elastomer (TPE) and the second plastics component (12) is a thermoplastic polymer (TP), in particular polypropylene (PP).

3. Aerodynamic spoiler according to either of Claims 1 and 2, **characterized**
- **in that** an upper slat (10') of the folded structure has at least one retaining element (13) and/or at least one retaining opening (14) for the fastening to the aerodynamic spoiler (2), and/or
- **in that** a lower slat (10'') of the folded structure has at least one retaining element (13) and/or at least one retaining opening (14) for the fastening to the structure/rear lid (8).

4. Aerodynamic spoiler according to one of Claims 1 to 3, **characterized in that** the folded structure is produced by injection moulding, the second plastics component (12) being injection moulded onto the first plastics component (11), or vice versa.

5. Aerodynamic spoiler according to one of Claims 1 to 4, **characterized in that** the end sides (15, 15') of the folded structure are of angled design, the slats (10) being formed only from the first, soft, plastics component (11) in the angled region (15, 15').

6. Aerodynamic spoiler according to one of Claims 1 to 5, **characterized in that** an illuminating device is provided in the region of at least one slat (10).

7. Aerodynamic spoiler according to Claim 6, **characterized in that** the illuminating device is designed as a brake light or as an illuminated emblem.

8. Aerodynamic spoiler according to one of Claims 1 to 5, **characterized in that** a colour insert is provided in the region of at least one slat (10).

9. Motor vehicle (1) with an aerodynamic spoiler (2) according to one of Claims 1 to 8.

## Revendications

1. Dispositif (2) de guidage d'air apte à être déplacé entre une position de non-utilisation et au moins une position d'utilisation, en particulier béquet arrière dont la partie d'extrémité (7) située à l'arrière dans la direction d'avancement (6) est reliée à une structure (8) et en particulier au hayon arrière (8) d'un véhicule automobile (1) au moyen d'un dispositif de recouvrement (5) qui présente une structure repliée,
le dispositif de recouvrement (5) étant configuré comme module à deux composants et le dispositif de recouvrement (5) étant réalisé en deux composants (11, 12) en matière synthétique,
**caractérisé en ce que**
un premier composant (11) en matière synthétique s'étend de manière continue sur les articulations (9) de la structure repliée et sur des lamelles (10) qui s'étendent entre les articulations (9) tandis qu'un deuxième composant (12) en matière synthétique, plus dur que le premier, n'est prévu que dans la zone occupée par les lamelles (10) pour renforcer ces dernières.

2. Dispositif de guidage d'air selon la revendication 1, **caractérisé en ce que** le premier composant (11) en matière synthétique est un élastomère thermoplastique (TPE) et le deuxième composant (12) en matière synthétique un thermoplastique (TP) et en particulier le polypropylène (PP).

3. Dispositif de guidage d'air selon l'une des revendications 1 et 2, **caractérisé en ce qu'**une lamelle supérieure (10') de la structure repliée présente au moins un élément de maintien (13) et/ou au moins une ouverture de maintien (14) pour être fixée sur le dispositif (2) de guidage d'air et/ou **en ce qu'**une lamelle inférieure (10'') de la structure repliée présente au moins un élément de maintien (13) et/ou au moins une ouverture de maintien (14) pour être fixée sur la structure ou le hayon arrière.

4. Dispositif de guidage d'air selon l'une des revendications 1 à 3, **caractérisé en ce que** la structure repliée est réalisée par une opération de moulage par injection, le deuxième composant (12) en matière synthétique étant moulé par injection sur le premier composant (11) en matière synthétique ou inversement.

5. Dispositif de guidage d'air selon l'une des revendications 1 à 4, **caractérisé en ce que** la structure repliée est coudée sur ses côtés frontaux (15, 15'), les lamelles (10) étant formées uniquement du premier composant (11) en matière synthétique molle dans la partie coudée (15, 15').

6. Dispositif de guidage d'air selon l'une des revendications 1 à 5, **caractérisé en ce qu'**un dispositif d'éclairage est prévu dans la zone occupée par au moins une lamelle (10).

7. Dispositif de guidage d'air selon la revendication 6, **caractérisé en ce que** le dispositif d'éclairage est configuré comme feu stop ou comme emblème éclairé.

8. Dispositif de guidage d'air selon l'une des revendications 1 à 5, **caractérisé en ce qu'**une garniture colorée est prévue dans la zone occupée par au moins une lamelle (10).

9. Véhicule automobile (1) doté d'un dispositif (2) de guidage d'air selon l'une des revendications 1 à 8.
